# EUROPÄISCHE PATENTANMELDUNG

(11) **EP 1 129 965 A2**
(43) Veröffentlichungstag der Anmeldung: **05.09.2001**
(21) Anmeldenummer: 01102535.0
(22) Anmeldetag: 06.02.2001
(51) Int. Cl.: B65G 11/12

(54) **Schüttgutübergabevorrichtung**

(30) Priorität: 04.03.2000 DE 10010697; 07.04.2000 DE 10017400
(71) Anmelder: Krupp Fördertechnik GmbH, 45143 Essen (DE)
(72) Erfinder: Peltzer, Georg, 41515 Grevenbroich (DE)
(74) Vertreter: John, Ernst, Dipl.-Ing.

(57) **Zusammenfassung**

Die Erfindung betrifft eine Schüttgutübergabevorrichtung, die den an einer Aufgabevorrichtung ankommenden Schüttgutstrom wahlweise auf einen der das Schüttgut in eine von mehreren unterschiedlichen Richtungen abtransportierenden Abförderer lenkt.

Um die genannte Schüttgutübergabevorrichtung niedrig bauen zu können und eine möglichst große Variationsmöglichkeit der Schüttgutstromumlenkung in unterschiedliche Richtungen zu ermöglichen, wird erfindungsgemäß vorgeschlagen, eine eine obere Aufgabeöffnung aufweisende Schurre (11) zu verwenden, die um eine vertikale Achse (10) schwenkbar ist und deren Auslaßöffnung außerhalb dieser vertikalen Achse (10) liegt.

## Beschreibung

Die Erfindung betrifft eine Schüttgutübergabevorrichtung, die den an einer Aufgabevorrichtung ankommenden Schüttgutstrom wahlweise auf einen der das Schüttgut in eine von mehreren unterschiedlichen Richtungen abtransportierenden Abförderer lenkt.

Solche Schüttgutübergabevorrichtungen sind bei sogenannten 90° Materialübergaben oder dann erforderlich, wenn der Schüttgutstrom in zeitlich aufeinanderfolgenden Abschnitten auf unterschiedliche Gurtförderer gelenkt werden soll. Eingeschlossen sind sowohl solche Anwendungsfälle, in denen ein Schüttgutstrom einer im wesentlichen gleichen Zusammensetzung zu unterschiedlichen Orten transportiert werden soll, um beispielsweise mehrere Halden aufzuschütten, als auch der Abtransport von Schüttgutströmen mit unterschiedlicher Zusammensetzung, die in unterschiedliche Richtungen abzuführen sind.

Nach dem Stand der Technik werden hierzu bereits Glocken- oder Pendelschurren eingesetzt, die um eine im oberen Bereich der Schurre festgelegte horizontal liegende Drehachse schwenkbar sind, so daß deren Abgabeöffnung in betreffenden Schwenkungs-Endlagen der Schurre oberhalb unterschiedlicher Abförderer positioniert werden können. Daneben sind auch noch Schiebeschurren bekannt, die über eine horizontale Linearführung mit ihren Abgabeöffnungen oberhalb von verschiedenen Abförderern positioniert werden können. Zwischen dem Abförderer und der Pendel- oder Schiebeschurre können auch Übergabeschurren zwischengeschaltet sein. Pendel- oder Schiebeschurren lassen sich jedoch konstruktionsbedingt nur entlang einer Geraden ausrichten und sind im Regelfall lediglich zur Beschickung von zwei Abförderern, allenfalls bei entsprechender Vergrößerung der Bauhöhe zur Beschickung von drei Abförderern geeignet.

Nach dem Stand der Technik sind auch Band-Vorschubköpfe bekannt, die jedoch eine Verlagerung des Abwurfkopfes des Zuförderbandes und einen entsprechenden Ausgleich der Förderbandlänge erfordern, was deren Handhabung erheblich erschwert.

Es ist weiterhin nach dem Stand der Technik bekannt, reversierbare Zwischenbänder zwischen dem Abwurfkopf eines Zuförderbandes und einer Zwischenschurre zu verwenden. Je nach zu beschickender Zwischenschurre wird der Förderstrom in eine der gewünschten Richtungen gelenkt. Allerdings erfordern solche Anlagen eine große Bauhöhe. Nachteilig ist auch der hohe Anlagenpreis.

Je nach verwendeter Ausführung müssen auch relativ viele Umlenkungen des Fördergutes vorgenommen werden, was den Anlagenverschleiß erhöht, die Gefahr von Anbackungen des Fördergutes auslöst, hohen Lärm verursacht sowie unerwünschte Kräfte auf die Umgebungskonstruktion auslöst. Vielfach ist bei den nach dem Stand der Technik bekannten Anlagentypen auch eine Staubabdichtung in nur mangelhafter Weise möglich oder sehr aufwendig. Zuweilen besteht auch die Gefahr, daß Fremdkörper in vorhandene Übergabeschurren hineinfallen können, in die der Fördergutstrom momentan nicht gelenkt wird.

Wird das übergebene Fördergut bzw. der Fördergutstrom nicht mittig auf die Abförderer gelenkt, wird hiermit eine quer zur Förderbandlängsachse wirkende Kraftkomponente bzw. ein Bandschieflauf erzeugt.

Es ist daher Aufgabe der vorliegenden Erfindung, eine Schüttgutübergabevorrichtung der eingangs genannten Art zu schaffen, die niedrig gebaut werden kann und eine möglichst große Variationsmöglichkeit der Schüttgutstromlenkung in unterschiedliche Richtungen ermöglicht.

Diese Aufgabe wird durch die Schüttgutübergabevorrichtung gemäß Anspruch 1 gelöst, indem die eine obere Aufgabeöffnung aufweisende Schurre um eine vertikale Achse schwenkbar ist. Die Auslaßöffnung der Schurre liegt außerhalb dieser vertikalen Drehachse. Bei Drehung dieser Schurre überstreicht deren Auslaß- oder Abgabeöffnung einen (teil-)kreisförmigen Ring, unterhalb dessen eine Übergabeschurre mit mehreren Abgangsöffnungen, von denen jede einem Förderer zugeordnet ist, oder Abförderer angeordnet sind. Je nach Bedarfsfall können betreffende Abgangsöffnungen der einen Übergabeschurre oder die mehreren Übergabeschurren oder Abförderer in gewünschter Anzahl sternförmig angeordnet sein. Je nach verwendeter Kreissegment-Einteilung sind bei drei Segmenten im 120°-Winkelabstand, bei einer viersegmentigen Einteilung im 90°-Winkelabstand etc. entsprechend angeordnete Abgangsöffnungen der Übergabeschurre oder Abförderer vorgesehen, die beispielsweise zur Beschickung mehrerer Halden eines Lagerplatzes nutzbar sind. Die Abförderer können in derselben Ebene ebenso verlaufen oder jeweils höhenversetzte Aufnahmebereiche besitzen, um nicht miteinander zu kollidieren, wenn ihre Längsachsen oder zumindest die Längsachsen ihrer Aufnahmebereiche einander kreuzen.

Weiterbildungen der Erfindung sind in den Unteransprüchen beschrieben.

So ist vorzugsweise die drehbare Schurre nur einseitig, d.h. fliegend gelagert, insbesondere mittels einer Kugeldrehverbindung, die außerhalb des Schurrenkörpers liegt. Der Antrieb kann beispielsweise über einen Stirnradgetriebemotor auf die Außenverzahnung der Kugeldrehverbindung wirken. Statt der erwähnten Ritzel-Zahnkranz-Transmission kann jedoch auch eine Kettenräder-Ketten-Transmission verwendet werden, etwa um die Anordnung des Drehantriebes mit Kettenrad weiter entfernt von der Drehachse wählen zu können. Für 90°-Schwenkungen können alternativ auch Verstellzylinder verwendet werden.

Die drehbare Schurre besitzt vorzugsweise einen mantelseitig geschlossenen Trichter, dessen Aufgabeöffnung zentrisch zur vertikalen Drehachse angeordnet ist. Durch diese geschlossene Trichterform läßt sich der aufgegebene Schüttgutstrom besser zentrieren und infolgedessen mittig auf den abführenden Gurtförderer aufgeben. Außerdem wird das Schüttgutmaterial auch in Förderrichtung beschleunigt.

Nach einer weiteren Ausgestaltung der Erfindung ist unterhalb der drehbar angeordneten Schurre eine Übergabeschurre angeordnet, deren Aufnahmeöffnungen auf einem gemeinsamen Kreisbogen um die vertikale Drehachse für die Schurre angeordnet sind und deren den jeweiligen Aufnahmeöffnungen zugeordnete Abgabeöffnung jeweils mittig über den Längsachsen von zugeordneten Abförderern liegt. Hierbei werden entsprechend der Anzahl der Abförderer gleich viele Abgabeöffnungen der Übergabeschurre verwendet. Die die jeweils einander zugeordneten Aufnahme- und Abgabeöffnungen verbindenden Übergabeachsen der Übergabeschurre liegen spitzwinklig zur vertikalen Drehachse und jeweils in den Vertikalebenen, in denen auch die Längsachsen der Abförderer liegen. Durch diese Maßnahme erfolgt die Schüttgutaufgabe auf das jeweilige Abförderband in Abfördererrichtung, d.h. ohne Querkomponente, so daß ein ansonsten drohender Bandschieflauf bei andersartiger Anordnung vermieden wird. Auch muß bei einer solche Ausführung der Schüttgutstrom zwischen der Aufgabeöffnung der Drehschurre und der Abgabeöffnung der Übergabeschurre nicht in der Förderrichtung umgelenkt werden, was ebenso verschleißmindernd wirkt wie Anbackungen verhindert.

Die vorgenannte Ausgestaltung der Erfindung wird vorzugsweise bei sternförmig angeordneten Abförderern verwendet. Stehen jedoch die Abförderer aus platz- oder verfahrenstechnischen Gründen mehr oder weniger parallel zueinander, ist es notwendig, das Schüttgut am Abgabeende der Übergabeschurre nochmals in Richtung des betreffenden Abförderers umzulenken. Hierzu wird jeweils ein Umlenkelement verwendet, das den Schüttgutstrom in Richtung der Längsachse des jeweiligen Abförderers umlenkt. Im übrigen liegen die die jeweils einander zugeordneten Aufnahme- und Abgabeöffnungen verbindenden Übergabeachsen der Übergabeschurren spitzwinklig zur vertikalen Drehachse.

Nach einer weiteren Ausgestaltung der Erfindung ist oberhalb der drehbaren Schurre eine Zwischenschurre mit einem im wesentlichen trichterförmigen Schüttraum unterhalb einer Abwurfhaube für das Schüttgut angeordnet. Die Abgabeöffnung dieser Zwischenschurre und die Aufnahmeöffnung der drehbar angeordneten Schurre liegen vorzugsweise zentrisch zur vertikalen Drehachse.

Nach einer weiteren Ausgestaltung der Erfindung ist die genannte Zwischenschurre und die Übergabeschurre starr montiert. Die Übergabeschurre, die drehbare Schurre, der Drehantrieb und die Kugel-Drehverbindung sind gemeinsam auf einer Bühne gelagert.

Nach einer Weiterbildung der Erfindung ist am unteren Ende der drehbaren Schurre eine Abdeckplatte angeordnet, deren einzige unverschließbare Öffnung die Abgabeöffnung darstellt. Mit dieser Maßnahme wird erreicht, daß alle anderen Aufnahmeöffnungen der benachbarten Übergabeschurren, die momentan nicht beschickt werden sollen, abgedeckt sind, so daß dort kein Material hineinfallen kann. Allerdings kann die Abdeckplatte eine oder mehrere verschließbare Inspektionstüren oder -deckel aufweisen, die bei in der Drehrichtung ausgerichteter Drehschurre in dem Bereich einer Aufgabeöffnung einer Übergabeschurre liegen.

Durch Ausrichtung der drehbaren Schurre ist es somit möglich, daß während der Beschickung der Übergabeschurre eine Inspektionstür geöffnet werden kann, wodurch der Zugang zu einer benachbarten, nicht beschickten Abgangsöffnung der Übergabeschurre bzw. bei entsprechend vielen Inspektionstüren zu allen übrigen Abgangsöffnungen freigelegt wird.

Nach einer Weiterbildung der Erfindung ist unterhalb der Zwischenschurre ein rohrförmiges Zwischenstück lösbar befestigt, daß in den Aufnahmetrichter der drehbaren Schurre hineinragt, vorzugsweise um 10 mm bis 100 mm. Ggf. zusätzlich kann am oberen Rand der Aufnahmeöffnung der drehbaren Schurre ein elastischer kragenförmiger Ring befestigt sein, der am Außenmantel des rohrförmigen Zwischenstückes abdichtend anliegt. Die vorgenannten Maßnahmen dienen dazu, die Außenumgebung gegen einen Staubaustritt abzuschirmen. Der genannte kragenförmige Ring kann aus mehreren segmentförmigen Teilen bestehen. Es kann jedoch auch ein geschlossener kragenförmiger einstückiger Ring verwendet werden. Um eine zusätzliche Staubabdichtung zu gewährleisten, sind die einzelnen Aufnahmeöffnungen der einzelnen Übergabeschurre oder die Gesamtheit aller dieser Aufnahmeöffnungen gemeinsam von einem nach oben weisenden Dichtkragen aus elastischem Material umgeben, der vorzugsweise von unten gegen die genannte Abdeckplatte anliegt. Hiermit wird ein Staubaustritt zwischen der Drehschurre und der Übergabeschurre verhindert.

Fakultativ können auch die Abförderer unterhalb der Übergangsschurre mit einer kastenförmigen Einhausung versehen sein, die am jeweils stirnseitigen Ende in Förderrichtung mit fransenartigen Vorhängen versehen ist. Auch diese grundsätzlich nach dem Stand der Technik bekannte Maßnahme dient in Verbindung mit den vorbeschriebenen Maßnahmen zur Vermeidung eines Staub-Austritts an die Umgebung. Die gesamte Anordnung ist im Bedarfsfall von der haubenförmigen Aufgabe (oberhalb der Zwischenschurre) bis in den Bereich des Abförderers im wesentlichen staubdicht abgeschlossen.

Im Regelfall wird die Drehschurre jeweils so ausgerichtet, daß der komplette aufgegebene Fördergutstrom in eine Abgangsöffnung der Übergabeschurre abgegeben wird. Alternativ hierzu ist es jedoch möglich, in der drehbar angeordneten Schurre oder in deren oberen Bereich ein den aufgegebenen Materialstrom in zwei Teilströme aufteilendes und diese Teilströme in nebeneinanderliegende Aufnahmeöffnungen der Übergabeschurre lenkendes Element angeordnet ist. Ggf. wird dieses Element konstruktiv durch zwei aneinanderliegende Kanten zweier benachbarter Aufgabeöffnungen der Übergabeschurre gebildet. In diesem Fall wird die drehbare Schurre nicht zentrisch zu einer Aufnahmeöffnung der Übergabeschurre ausgerichtet, sondern in eine Zwischenstellung, in der sich der Materialstrom in beide nebeneinanderliegenden Aufnahmeöffnungen der Übergabeschurre aufteilt.

Die vorbeschriebene Schüttgutübergabevorrichtung ist insbesondere für Schüttgutkörnungen mit einem Durchmesser bis zu 100 mm bzw. für gemischte Schuttgüter geeignet. Die Schüttgutkonsistenz kann staubtrocken bis feucht und klumpend sein. Als Schüttgutmaterial kommen Mineralien, d.h. Erze, Kohle, Steine, Ton und/oder Holzanteile, ggf. auch in Mischungen, in Betracht.

Weitere Ausgestaltungen der Erfindung werden im folgenden anhand der Zeichnungen erläutert. Es zeigen
- Fig. 1: eine skizzierte Seitenansicht einer erfindungsgemäßen Schüttgutübergabevorrichtung,
- Fig. 2 und 3: jeweils Ansichten von oben auf die Schüttgutübergabevorrichtung nach Fig. 1 in unterschiedlichen Ausführungen,
- Fig. 4 und 5: jeweils Seitenansichten einer Schüttgutübergabevorrichtung in einer erweiterten Ausführungsform,
- Fig. 6: eine Draufsicht auf eine Abdeckplatte,
- Fig. 7: eine teilweise geschnittene Ansicht des unteren Bereiches einer Zwischenschurre mit dortiger Abdichtung (Bereich x nach Fig. 5),
- Fig. 8: eine Schnittansicht im oberen Bereich der Übergabeschurre und
- Fig. 9: eine Teilschnittansicht des Übergangsbereiches von der drehbaren Schurre zur Übergabeschurre.

Das Kernstück der erfindungsgemäßen Schüttgutübergabevorrichtung ist die um eine vertikale Achse 10 drehbare Schurre 11 mit einer zentralen Lagerung 12. Als Drehantrieb dient ein Stirnradgetriebemotor 13, dessen Getrieberad in eine Kugeldrehverbindung mit Außenverzahnung eingreift. Oberhalb der drehbaren Schurre 11 kann eine Zwischenschurre 14 und unterhalb der drehbaren Schurre 11 eine abführende Schurre 37 angeordnet sein. Die jeweiligen Übergangsbereiche zwischen der Zwischenschurre 14 und der drehbaren Schurre 11 bzw. der drehbaren Schurre 11 und der Übergabeschurre 37 können durch Abdichtungen 16 und 17 gegen einen Staubaustritt abgedichtet sein.

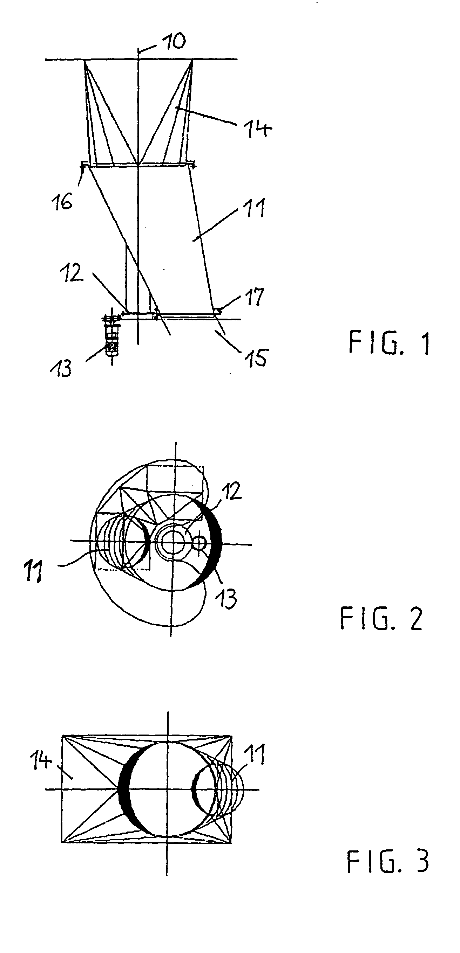

Die obere Aufnahmeöffnung der drehbaren Schurre 11 ist ebenso wie die im Durchmesser gleich große bzw. kleinere Auslaßöffnung der Zwischenschurre 14 zentrisch zur Drehachse 10 angeordnet. Die Zwischenschurre 14 ist starr montiert, so daß sie ihre Lage stets beibehält, was auch für die ebenfalls kreisrunde Aufnahmeöffnung der drehbaren Schurre 11 zutrifft. Die Auslaßöffnung der drehbaren Schurre 11 ist dagegen exzentrisch zur Drehachse 10 angeordnet. Je nach Drehung der drehbaren Schurre 11 ist die Auslaßöffnung der drehbaren Schurre 11 über einer von mehreren Aufnahmeöffnungen der Übergabeschurre 37 und deren jeweils kreisrunden Aufnahmeöffnungen positionierbar. Bei vier in einem Winkel von 90° angeordneten Aufnahmeöffnungen mit jeweils zugeordneten Abgangsöffnungen wird hierzu die drehbare Schurre 11 um jeweils 90° gedreht, um die benachbarte Aufnahmeöffnung beschicken zu können. Die jeweiligen Schurren 14, 11 und 37 sind vorzugsweise trichterförmig ausgebildet, wobei die Längsachse des betreffenden Trichters der drehbaren Schurre 11 schrägwinklig zur Drehachse 10 liegt. Wie aus Fig. 1 bis 3 ersichtlich ist, wird das in die Zwischenschurre 14 aufgegebene Material durch die Trichterform der drehbaren Schurre in eine exzentrisch zur Drehachse 10 liegende Richtung abgelenkt.

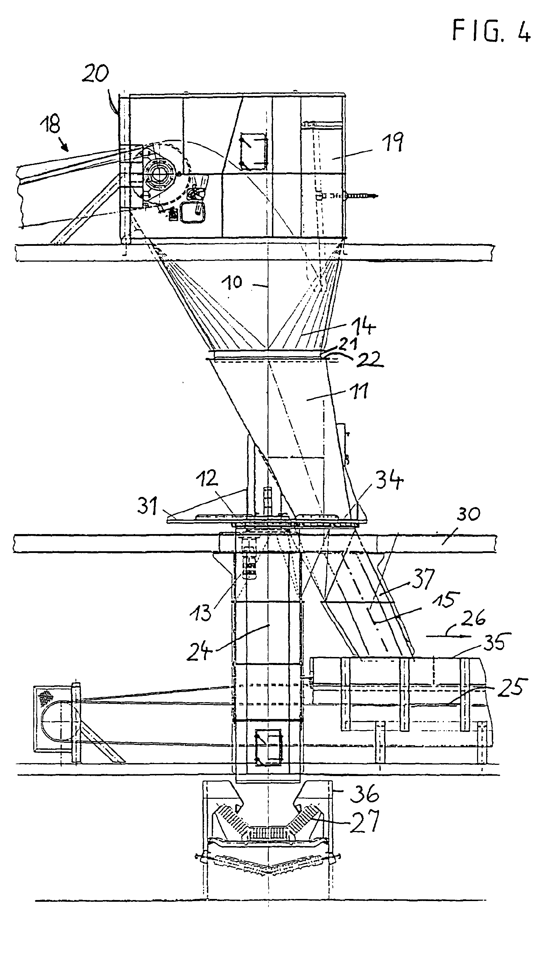

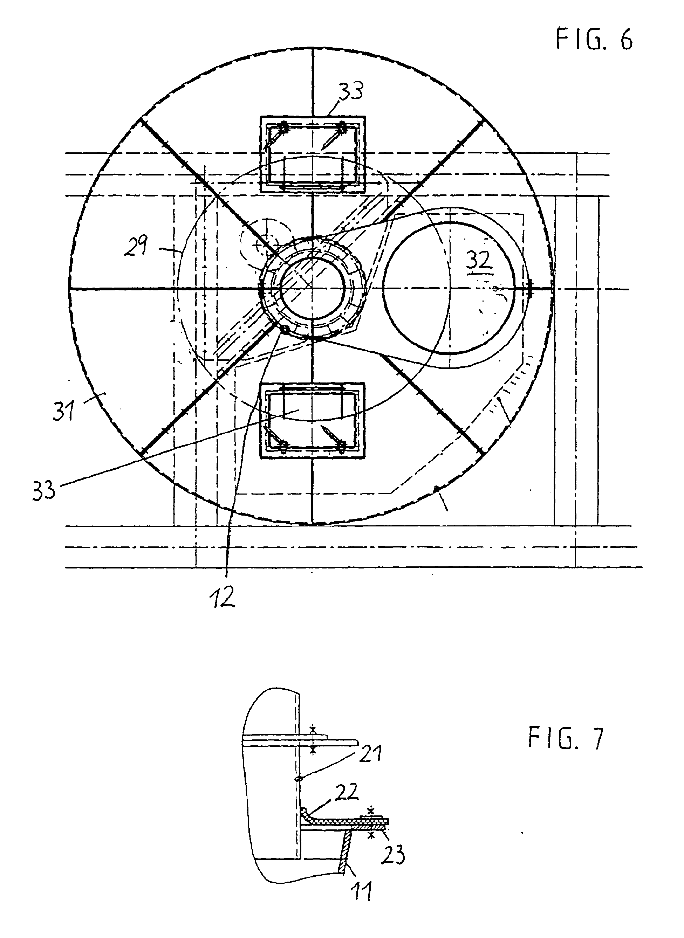

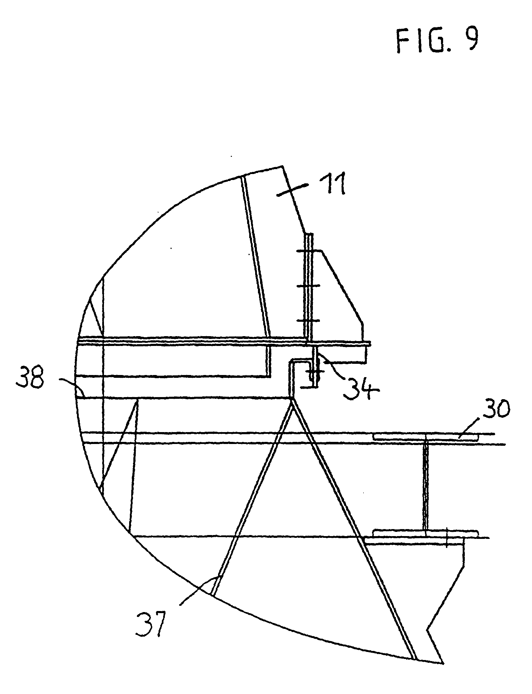

Eine detailliertere Ansicht der erfindungsgemäßen Schüttgutübergabevorrichtung mit Zuförderer und Abförderern zeigen Fig. 4 bis 9. Das über einen Zuförderer, der hier ein Endlosförderband 18 ist, angeforderte Material wird im Bereich einer Abwurfhaube 19 mit einem stirnseitigen, gegen Staubaustritt abdichtenden Fransenvorhang 20 abgeworfen und fällt in den Trichter der Zwischenschurre 14, an dem unterseitig ein rohrförmiges Zwischenstück 21 angeflanscht ist, das über einen Überlappungsbereich von ca. 100 mm in die Aufnahmeöffnung der drehbaren Schurre 11 hineinragt. Zusätzlich ist eine Abdichtung 22 vorgesehen, die in Fig. 7 näher dargestellt ist. Diese besteht aus einem elastischen kragenförmigen Ring, der an dem oberen Rand 23 der drehbaren Schurre 11 befestigt ist und dessen Innenrand am Außenmantel des rohrförmigen Zwischenstückes 21 federnd anliegt. Wie bereits erwähnt, befindet sich unterhalb der Austrittsöffnung der drehbaren Schurre 11 eine Übergabeschurre 37 mit mehreren Abgangsöffnungen und hierunter entsprechend angeordnete Abförderer 25 (zum Abtransport in Richtung des Pfeiles 26) und 27 (zum Abtransport in Richtung des Pfeiles 28). Im vorliegenden Fall sind die Förderbänder 25 und 27 in verschiedenen Ebenen angeordnet, wobei der Kreuzungspunkt der Verlängerung der Längsachsen der Abförderer 25 und 27 (oder weiterer Abförderer) sich mit der Drehachse 10 schneidet. Die beiden dargestellten Förderbänder 25 und 27 sind mit ihren Längsachsen rechtwinklig zueinander angeordnet. Es sind jedoch auch andere Anordnungen denkbar, z.B. in Form eines Drei-, Fünf- oder Sechsecks, wobei die Abförderer meist in etwa derselben Ebene liegen, ihre jeweiligen Aufnahmebereiche jedoch höhenversetzt sind, um nicht miteinander zu kollidieren. Bei etwa rechtwinkliger Anordnung können so vier Abförderbänder von einer Übergabeeinrichtung beschickt werden, um sechs Abförderer zu beschicken wird eine entsprechende 60°-Anordnung der Bänder zueinander gewählt. Die Fördergutabgabe erfolgt im Regelfall nur auf eines der vorhandenen Abförderbänder 25, 27 etc.. Alternativ ist jedoch die Schüttgutübergabe auf gleichzeitig zwei Bänder durch definierte Teilung des aus der Drehschurre fallenden Gutes möglich, etwa dadurch, daß in der Übergabeschurre 37 in deren oberen Bereich ein den aufgegebenen Materialstrom in zwei Teilströme aufteilendes und diese in nebeneinanderliegende Aufnahmeöffnungen der Übergabeschurre 37 lenkendes Element 38 angeordnet ist, so daß gleichzeitig je nach Ausrichtung mehr oder weniger mittig über der Scheidekante dieser Öffnungen der Materialstrom geteilt wird. Die Zwischenschurre 14 und die Übergabeschurre 37 sind starr montiert, während die Drehschurre 11 um die vertikale Achse 10 drehbar gelagert ist. Jede Abgangsöffnung (mit Längsachsen 15 bzw. 24) der Übergabeschurre 37 ist einem Abförderer 25, 27 etc. fest zugeordnet. Die Aufnahmeöffnungen der Übergabeschurre 37 liegen alle auf einem gemeinsamen Kreisbogen 29 (siehe Fig. 6) und - bezogen auf die vertikale Achse 10 - um jeweils ca. 90° zueinander angeordnet (bzw. in einer Teilung, die der winkligen Anordnung der Abförderbänder 25, 27 entspricht). Die kreisförmige Abgabeöffnung der Zwischenschurre 14 und die kreisförmige Aufnahmeöffnung der drehbaren Schurre 11 liegen zentrisch zur vertikalen Drehachse 10. Die Abgabeöffnung der drehbaren Schurre 11 liegt stets auf dem genannten Kreisbogen 29, der zentrisch zur Drehachse 10 liegt, um den die drehbare Schurre 11 verschwenkbar ist. Die Lagerung der drehbaren Schurre 11 liegt außerhalb des Schurrenkörpers seitlich von diesem, etwa in Höhe seiner Abgabeöffnung an nur einer Stelle, also "fliegend". Vorzugsweise wird die Lagerung mittels einer Kugeldrehverbindung 12 realisiert. Als Antrieb wird ein Elektromotor 13 verwendet, mittels dessen über ein Ritzel-Zahnkranzeingriff im Bereich der Kugeldrehverbindung 12 eine Verschwenkung der drehbaren Schurre 11 möglich ist. Da das Fördergut nicht durch die Kugeldrehverbindung hindurchgefördert wird, ist der gesamte Drehantrieb weniger störanfällig. Die Lagerung der drehbaren Schurre 11, der Zwischenschurre 14, der Kugel-drehverbindung 12 und des Antriebes 13 erfolgt an einer gemeinsamen Bühne 30. Die drehbare Schurre 12 ist ausschließlich im Bereich der Kugeldrehverbindung 12 gelagert.

In Höhe der Abgabeöffnung der Drehschurre 11 besitzt diese eine runde, ggf. radial mehrfach geteilte Abdeckplatte 31, welche nur die bereits beschriebene Abgabeöffnung 32 frei läßt. Die Abdeckplatte 31 am unteren Ende der drehbaren Schurre 11 hat die Aufgabe, die Aufnahmeöffnungen aller Übergabeschurren, in die momentan kein Fördergut übergeben werden soll, abzudecken. Die Abdeckplatte besitzt jedoch verschließbare Inspektionstüren 33, die entsprechend der durch die Zahl der Abfördererbänder gewählten Teilung (hier 90°) gegenüber der Abgabeöffnung 32 der Drehschurre 11 versetzt sind.

Die Aufnahmeöffnungen der Übergabeschurre 37 sind einzeln bzw. die Gesamtheit aller Aufnahmeöffnungen der Übergabeschurre ist gemeinsam von einem nach oben weisenden Dichtkragen 34 aus elastischem Material umgeben. Dieser liegt von unten gegen die Abdeckplatte 31 an und besteht vorzugsweise aus einem Gummi-Flachmaterial. Die Abdeckplatte 31 dient zur Staubdichtung beim Schüttgutübergang von der drehbaren Schurre 11 zu der Übergabeschurre 37. Wie auch der elastische Ring 22 ist der Dichtkragen 34 so ausgebildet, daß er eine Schwenkbewegung der drehbaren Schurre 11 um die Achse nicht behindert. Die Abdeckplatte 31 sowie die beschriebenen Abdichtungen verhindern ferner, daß von außen Fremdkörper in die Übergabeschurren gelangen können.

Die Übergabe des Fördergutstromes am unteren Abgabeende jeder Übergabeschurre 37 erfolgt jeweils in eine kastenförmige, in Bandförderrichtung vorn und hinten mit Fransenvorhängen geschlossene Einhausung 35, 36.

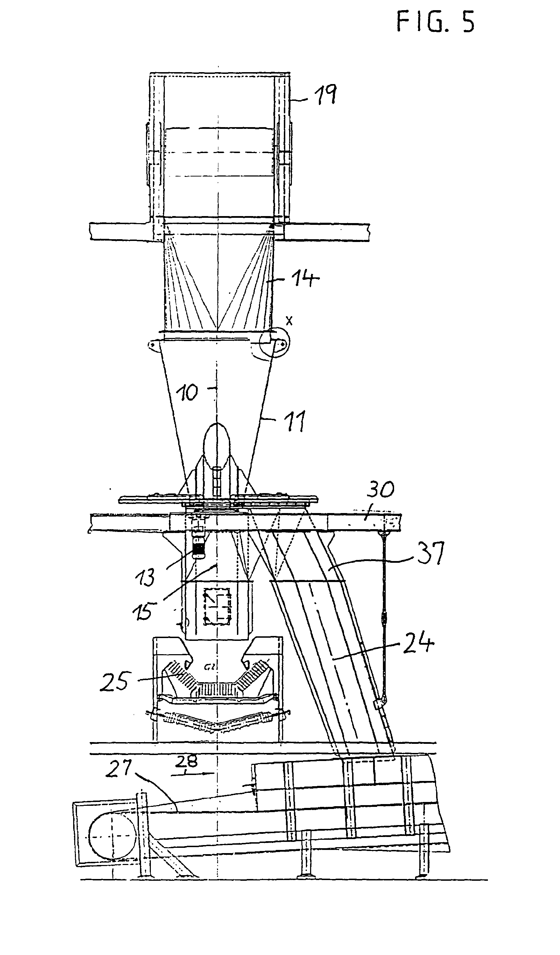

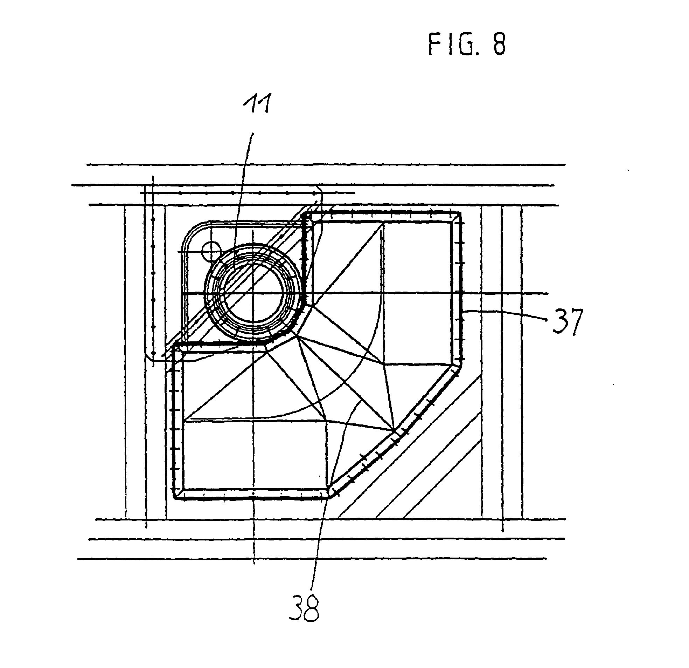

Wie aus Fig. 8 zu entnehmen ist, besitzt die einzige Übergabeschurre 37 im oberen Bereich mehrere nebeneinanderliegende Aufnahmeöffnungen, die mit einer Kante 38 aneinandergrenzen. Wird die drehbare Schurre 11 etwa mittig zu dieser Kante 38 ausgerichtet, erreicht man eine Aufteilung des aufgegebenen Materialstromes in die beiden nebeneinanderliegenden Aufnahmeöffnungen, wodurch dieser Materialstrom in Richtung der in Fig. 4 und 5 dargestellten Längsachsen 15 und 24 aufgeteilt wird und somit auf die um 90° versetzt zueinanderstehenden Abförderer 25, 27 aufgeteilt wird. Die Übergabeschurre 37 ist derart aufgebaut, daß sie "hosenbeinartige" Abgangsöffnungen mit jeweiligen Längsachsen 15, 24 aufweist, die den aufgegebenen Materialstrom in Richtung eines der vorhandenen Abförderern 25 oder 27 lenkt. Es ist alternativ selbstverständlich möglich, anstelle der dargestellten einzigen Übergabeschurre 37 mehrere getrennte Übergabeschurren zu verwenden, von denen dann eine der Übergabeschurren oder, wie bei der vorbeschriebenen Aufteilung des Materialstromes, zwei nebeneinanderliegende Übergabeschurren mit Schüttgut beschickt werden.

Die vorbeschriebene Schüttgutübergabevorrichtung ermöglicht einen verschleißarmen Materialtransport und verhindert Anbackungen, da der Fördergutstrom im wesentlichen frei fallen bzw. rutschen kann und auf dem Weg zu den Abförderbändern keine quer zur Förderrichtung liegenden Umlenkungen erfährt. Die einzelnen Schurren 11, 14 und 37 können steil gebaut werden, so daß sich insgesamt eine niedrige Gesamtbauhöhe der Vorrichtung erreichen läßt. Verschleißgefährdete Teile, wie insbesondere die Dichtungen, können leicht ausgetauscht bzw. repariert werden. Durch die ineinander übergehenden Schurren 11, 14 und 37 sowie die Einhausungen in Form einer Abwurfhaube 19 mit Fransenvorhängen,

Dichtungen 22, 34 und die über einige Meter reichenden Einhausungen 35, 36 wird ein optimaler Staubschutz garantiert. Die Lage und Ausrichtung der Abgangsöffnungen der Übergabeschurre 37 in bezug auf die Abförderbänder garantiert eine im wesentlichen mittige Schüttgutaufgabe, womit ein Bandschieflauf verhindert wird. Die Abförderbandbeladung kann bis zu der zulässigen Belastungsgrenze bei geringstmöglichem Förderbandverschleiß erfolgen.

## Patentansprüche

1. Schüttgutübergabevorrichtung, die den an einer Aufgabevorrichtung ankommenden Schüttgutstrom wahlweise auf einen der das Schüttgut in eine von mehreren unterschiedlichen Richtungen abtransportierenden Abförderer lenkt,
**gekennzeichnet,**
durch eine eine obere Aufgabeöffnung aufweisende Schurre (11), die um eine vertikale Achse (10) schwenkbar ist und deren Auslaßöffnung außerhalb dieser vertikalen Achse (10) liegt.

2. Schüttgutübergabevorrichtung nach Anspruch 1, **dadurch gekennzeichnet**, daß die Schurre (11) nur einseitig (fliegend) gelagert ist, vorzugsweise mittels einer Kugeldrehverbindung (12), die außerhalb des Schurrenkörpers liegt.

3. Schüttgutübergabevorrichtung nach Anspruch 2, **dadurch gekennzeichnet**, daß die Schurre (11) durch einen Drehantrieb (13)verschwenkbar ist, der vorzugsweise eine Ritzel-Zahnkranz-Transmission oder ein Verstellzylinder ist.

4. Schüttgutübergabevorrichtung nach einem der Ansprüche 1 bis 3, **dadurch gekennzeichnet**, daß die Schurre (11) einen mantelseitig geschlossenen Trichter besitzt, dessen Aufnahmeöffnung vorzugsweise zentrisch zur vertikalen Drehachse (10) angeordnet ist.

5. Schüttgutübergabevorrichtung nach einem der Ansprüche 1, bis 4, **dadurch gekennzeichnet**, daß unterhalb der drehbar angeordneten Schurre (11) eine Übergabeschurre (37) angeordnet ist, deren Aufnahmeöffnungen auf einem gemeinsamen Kreisbogen (29) um die vertikale Drehachse (10) für die Schurre (11) angeordnet sind und deren den jeweiligen Aufnahmeöffnungen zugeordnete Abgabeöffnung jeweils mittig über den Längsachsen von zugeordneten Abförderern (25, 27) liegen.

6. Schüttgutübergabevorrichtung nach Anspruch 5, **dadurch gekennzeichnet**, daß die die jeweils einander zugeordneten Aufnahme- und Abgabeöffnungen verbindenden Übergabeachsen (15, 24) der Übergabeschurre (37) spitzwinklig zur vertikalen Drehachse (10) und jeweils in den vertikalen Ebenen liegen, in denen auch die Längsachsen der Abförderer (25, 27) liegen.

7. Schüttgutübergabevorrichtung nach Anspruch 5, **dadurch gekennzeichnet**, daß die die jeweils einander zugeordneten Aufnahme- und Abgabeöffnungen verbindenden Übergabeachsen (15, 24) der Übergabeschurre (37) spitzwinklig zur vertikalen Drehachse (10) liegen und daß sich im Bereich der Abgabeöffnungen jeweils ein Umlenkelement (39) befindet, das den Schüttgutstrom in Richtung der Längsachse des jeweiligen Abförderers (25, 27) umlenkt.

8. Schüttgutübergabevorrichtung nach einem der Ansprüche 1 bis 7, **dadurch gekennzeichnet**, daß oberhalb der drehbaren Schurre (11) eine Zwischenschurre (14) mit einem im wesentlichen trichterförmigen Schüttraum unterhalb einer Abwurfhaube (19) für das Schüttgut liegt.

9. Schüttgutübergabevorrichtung nach Anspruch 8, **dadurch gekennzeichnet**, daß die Abgabeöffnung der Zwischenschurre (14) und die Aufnahmeöffnung der drehbar angeordneten Schurre (11) zentrisch zur vertikalen Drehachse (10) liegen.

10. Schüttgutübergabevorrichtung nach einem der Ansprüche 1 bis 9, **dadurch gekennzeichnet**, daß die Zwischenschurre (14) und die Übergabeschurre (37) starr montiert sind und daß die Übergabeschurre (37), die drehbare Schurre (11), der Drehantrieb (13) und die Kugel-Drehverbindung (12) gemeinsam auf einer Bühne (30) gelagert sind.

11. Schüttgutübergabevorrichtung nach einem der Ansprüche 1 bis 10, **dadurch gekennzeichnet**, daß im Bereich des unteren Endes der drehbaren Schurre (11) eine Abdeckplatte (31) an dieser befestigt ist, durch deren einzige unverschließbare Öffnung (32) die Abgabeöffnung der drehbaren Schurre (11) nach unten hindurchtritt.

12. Schüttgutübergabevorrichtung nach Anspruch 11, **dadurch gekennzeichnet**, daß in der Abdeckplatte (31) eine oder mehrere verschließbare Inspektionstüren (33) oder -deckel derart angeordnet sind, daß sich über jeder der anderen Aufnahmeöffnungen der Übergabeschurre (37) eine Inspektrionstür (33) oder -deckel befindet, wenn die Aufgabeöffnung der drehbaren Schurre (11) über einer Aufnahmeöffnung der Übergabeschurre (37) liegt.

13. Schüttgutübergabevorrichtung nach einem der Ansprüche 8 bis 12, **dadurch gekennzeichnet**, daß unterhalb der Zwischenschurre (14) ein rohrförmiges Zwischenstück (21) lösbar befestigt ist, das in den Aufnahmetrichter der drehbaren Schurre (11) hineinragt, vorzugsweise 10 mm bis 100 mm.

14. Schüttgutübergabevorrichtung nach einem der Ansprüche 8 bis 13, **dadurch gekennzeichnet**, daß am oberen Rand der Aufnahmeöffnung der drehbaren Schurre (11) ein elastischer kragenförmiger Ring (22) befestigt ist, der am Außenmantel des Zwischenstückes (21) abdichtend gegen einen Staubaustritt anliegt.

15. Schüttgutübergabevorrichtung nach Anspruch 14, **dadurch gekennzeichnet**, daß der kragenförmige Ring (22) aus mehreren segmentförmigen Teilen besteht.

16. Schüttgutübergabevorrichtung nach einem der Ansprüche 5 bis 15, **dadurch gekennzeichnet**, daß die einzelnen Aufnahmeöffnungen der Übergabeschurre (37) oder die Gesamtheit aller dieser Aufnahmeöffnungen gemeinsam von einem nach oben weisenden Dichtkragen (34) aus elastischem Material umgeben sind, der vorzugsweise von unten gegen die Abdeckplatte (31) anliegt.

17. Schüttgutübergabevorrichtung nach einem der Ansprüche 1 bis 16, **dadurch gekennzeichnet**, daß die Abförderer (25,27) unterhalb der Übergabeschurre (37) mit einer kastenförmigen Einhausung (35, 36) versehen sind, die am jeweils stirnseitigen Ende in Förderrichtung mit fransenartigen Vorhängen versehen ist.

18. Schüttgutübergabevorrichtung nach einem der Ansprüche 1 bis 17, **dadurch gekennzeichnet**, daß in der Übergabe-Schurre (37) in deren oberen Bereich ein den aufgegebenen Materialstrom in zwei Teilströme aufteilendes und diese in nebeneinanderliegende Aufnahmeöffnung der Übergabeschurre (37) lenkendes Element (38) angeordnet ist.

19. Schüttgutübergabevorrichtung nach Anspruch 18, **dadurch gekennzeichnet**, daß das den aufgegebenen Materialstrom in zwei Teilströme aufteilende Element (38) durch zwei aneinanderliegende Kanten zweier benachbarter Aufnahmeöffnungen der Übergabeschurre (37) gebildet wird.
